# EUROPEAN PATENT APPLICATION

(11) **EP 3 413 409 A1**
(43) Date of publication of application: **12.12.2018**
(21) Application number: 16889082.0
(22) Date of filing: 18.10.2016
(51) Int. Cl.: H01R 31/06, H01R 13/70, H02J 7/00

(54) **CONNECTOR, SAFETY CONTROL APPARATUS, CHARGING APPARATUS, AND MOBILE DEVICE**

(30) Priority: 05.02.2016 CN 201610083177
(71) Applicant: Chigoo Interactive Technology Co., Ltd., Xinwu District Wuxi Jiangsu 214028 (CN)
(72) Inventor: CHEN, Tao, Wuxi Jiangsu 214028 (CN); LAN, Weijian, Wuxi Jiangsu 214028 (CN); ZHOU, Hua, Wuxi Jiangsu 214028 (CN); PAN, Chuanrong, Wuxi Jiangsu 214028 (CN); YANG, Yong, Wuxi Jiangsu 214028 (CN)
(74) Representative: Hautier IP
(86) International application number: PCT/CN2016/102367
(87) International publication number: WO 2017/133271

(57) **Abstract**

Disclosed is a connector including a male plug having a first electrode, a female socket having a second electrode, and a control member. The control member includes a first control component on the first electrode side and a second control component on the second electrode side. When a current connector and its anterior connector connect, a first control component of the current connector and a second control component of the anterior connector are coupled after a first electrode of the current connector and a second electrode of the anterior connector contact; and when the two connectors disconnect, the first control component of the current connector and the second control component of its anterior connector are decoupled before the first electrode of the current connector and the second electrode of the front connector separate. Also disclosed are a security control device, a charging system and a mobile device.

## Description

### TECHNICAL FIELD

The present invention relates to charging technology for mobile devices, and more particularly to a connector that can be used for charging multiple mobile devices stacked in series, a security control device, a charging device, and a mobile device.

### BACKGROUND

With the development of the commercial and public service industries, mobile devices such as trolleys or luggage trolleys have been widely used in public places such as shopping malls, supermarkets, and airports to facilitate users to carry goods or luggage. In order to facilitate the user to obtain the location information, navigation information, advertisement information and other related information of stores, an existing trolley or luggage trolley is usually provided with an electric displaying device which is necessary to be charged. Since these devices are used in public service areas, a safety weak voltage is required during the charging process. Moreover, as there are a number of such devices like trolleys, it is necessary to charge them in batches (with the devices stacked in series).

Usually, when trolleys in the charging queue are stacked to be charged, once electrodes of a front trolley contact electrodes of a following trolley or electrodes of a head trolley contact electrodes of the charging device, a charging circuit immediately operates. Once the electrodes of the front and its following trolleys or the electrodes of the head trolley and the charging device are out of contact upon removing of a trolley, the charging circuit is immediately broken and charging process is stopped. Since a plurality of trolleys is stacked and simultaneously charged, a current flowing through a charging power supply bus (hereinafter referred to as charging bus) for trolleys is relatively large. In particular, the current flowing through the charging bus for the trolleys at the forefront (head trolley) which is connected to the output of a charging power supply may be very high during the constant current charging phase. A charging power input terminal of each trolley is connected with a high-frequency and low-impedance input filter capacitor having large capacity for absorbing large ripple current generated by a switching power supply of a charging portion to ensure stable operation of the charging circuit. Due to existence of these filter capacitors, when a trolley is connected to a charging power supply, the power supply will charge the input filter capacitor of the trolley, thus a large capacitor charging current will be generated instantly in the power supply circuit. When a plurality of trolleys is serially stacked together, the more the devices that are serially stacked, the larger the capacity of the input filter capacitors connected to the power supply circuit is, and the larger the capacitor charging current generated on the power supply circuit is at the moment when the charging power supply is connected with the charging circuit. When the instantaneous charging current of the capacitor is large enough to generate a contact spark between the planar electrode slice of the device charging bus and the elastic contact piece of the power supply at the moment when the charging power supply and the device are connected, it is very possible for the elastic contact piece and the planar electrode slice to be hurt. Similarly, during the charging process of the serial stacked trolleys, due to the large current of the charging bus, when the device under charging is removed without turning off the power supply, electric sparks will be generated between the elastic contact piece of the charging power supply and the planar electrode slice of the device charging bus at the moment when the trolley is separated from the charging power, causing the elastic contact piece and the planar electrode slice to be burned and thus damaged. In addition, when more than one trolleys are serially stacked and taken out behind the device under charging, the elastic contact pieces and the planar electrode slices electrically connecting between the front and rear trolleys could come into or out of contact instantaneously, thereby generating electric sparks which may burn and damage the elastic contact pieces and the planar electrode slices.

### SUMMARY

One of the objects of the present invention is to overcome at least one of the above drawbacks of the prior art. For this purpose, an electrical connector, a security control device, a charging device, and a mobile device are disclosed.

According to an aspect of the invention, there is provided a connector, comprising: a male plug mounted with a first electrode, a female socket mounted with a second electrode, and a control member, the control member comprising: a first control component disposed on the side of the first electrode; a second control component disposed on the side of the second electrode and electrically connected to the first control component; wherein the control member is configured to: when a current connector is connected to its anterior connector, a first control component of the current connector and a second control component of the anterior connector are coupled after a first electrode of the current connector and a second electrode of the anterior connector come into contact; and when a current connector is disconnected from its anterior connector, a first control component of the current connector and a second control component of the anterior connector are decoupled before a first electrode of the current connector and a second electrode of the anterior connector are separated.

According to still another aspect of the present invention, there is provided a security control device, which comprises a connector as described above and a detection control switch that is turned on or off according to a state of coupling or decoupling of the first control component of the current connector and the second control component of the anterior connector.

According to still another aspect of the present invention, there is provided a charging device, comprising: a connector comprising a male plug mounted with a first electrode and a female socket mounted with a second electrode, and a control member, the control member comprising a first control component disposed on the side of the first electrode and a second control component electrically connected to the first control component and disposed on the side of the second electrode, wherein the control member is configured to: when the current connector is connected to its anterior connector, a first control component of the current connector and a second control component of the anterior connector are coupled after a first electrode of the current connector and a second electrode of the anterior connector come into contact; and when the current connector is separated from its anterior connector, a first control component of the current connector and the second control component of the anterior connector are decoupled before a first electrode of the current connector and a second electrode of the anterior connector are separated; a detection control switch which is electrically connected to the control member and turned on or off according to a state of coupling or decoupling of the first control component of the present connector and the second control component of the front connector; and a charging circuit connected to or disconnected from an external power supply through the detection control switch.

In some embodiments, the detection control switch may comprise: a detection unit configured to, for adjacent mobile devices, detect a state of coupling or decoupling between the first control component of a mobile device and the second control component of its anterior mobile device, and a switch unit configured to receive an output signal from the detection unit, and connect an external charging power supply to a charging circuit for charging, or disconnect the external charging power supply from the charging circuit to stop the charging operation of the charging circuit according to the signal. According to still another aspect of the present invention, a mobile device is provided, comprising a device body and the above-described charging device mounted on the device body.

Therefore, through the above design, the position difference can be used to generate the delay of the connection time between different devices, which can effectively ensure that the charging device start charging under the condition of good contact with mobile devices and power off before separated from the mobile devices to prevent the arcing phenomenon caused by action which forms security hazards such as electric sparks. Moreover, the product has a simple structure, ease of use and wide adaptability.

### BRIEF DESCRIPTION OF THE DRAWINGS

Fig. 1 is a schematic diagram of trolleys stacked in series to from a charging queue according to an embodiment of the present invention;
Fig. 2 is a schematic structural diagram of a connector of a charging device for serially stacked mobile devices according to an embodiment of the present invention;
Fig. 3(a) is a schematic structural diagram of a contact-type connector according to an embodiment of the present invention;
Fig. 3(b) is a schematic structural diagram of a photoelectric inductive type connector according to an embodiment of the present invention;
Fig. 4 is a circuit diagram of an embodiment of a charging device of the present invention;
Fig. 5(a) is a schematic diagram showing the state of a contact-type security control device when the trolley A and the trolley B are initially in contact;
Fig. 5(b) is a plan diagram showing the state of the security control device when the electrodes of the trolley A and that of the trolley B are completely in contact;
Fig. 5(c) is a schematic perspective view of the state in Fig. 5 (b);
Fig. 6 is a schematic structural diagram of a charging power supply socket for mobile devices according to an embodiment of the present invention;
Fig. 7 is a schematic circuit diagram of an infrared detection receiving module and an infrared detection transmitting module in Fig. 3(b);
Fig. 8 is a schematic circuit diagram of an infrared detection receiving module and an infrared detection transmitting module when mobile devices are stacked in series according to an embodiment of the present invention; and
Fig. 9 is a schematic circuit diagram of an infrared induction-type trolley according to an embodiment of the present invention.

### DETAILED DESCRIPTION

The present invention will now be described in further detail with reference to the accompanying drawings. A trolley taken as an embodiment of a mobile device will be described.

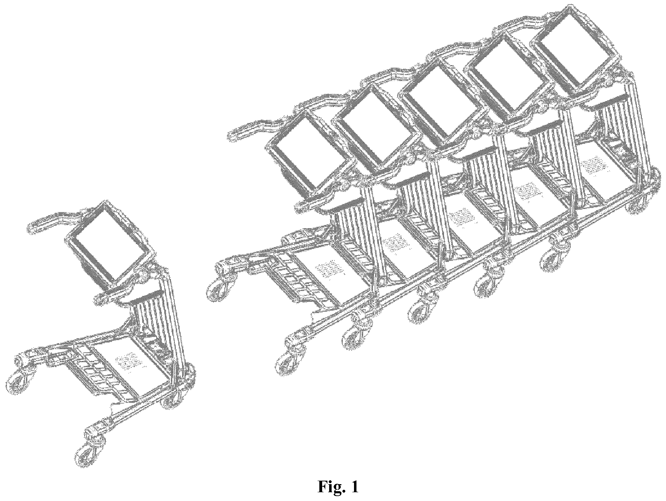

Fig. 1 is a schematic diagram of trolleys stacked in series to form a charging queue according to an embodiment of the present invention. Referring to Fig. 1, in order to charge the trolleys in batch, charging devices serially stack the trolleys into a charging queue. The charging device can be mounted on the bottom of the frame of the trolley.

The charging device comprises a connector having a male plug and a female socket for serially stacked mobile devices to form a charging queue. A first electrode is mounted in the male plug and a second electrode is mounted in the female socket. General contents of the specific charging device can be referred to, for example, the Chinese Utility Model Patent No. 201320013022.2 (authorization announcement number: CN203103711U; authorization announcement dated July 31, 2013). The entire contents of this patent document are incorporated herein.

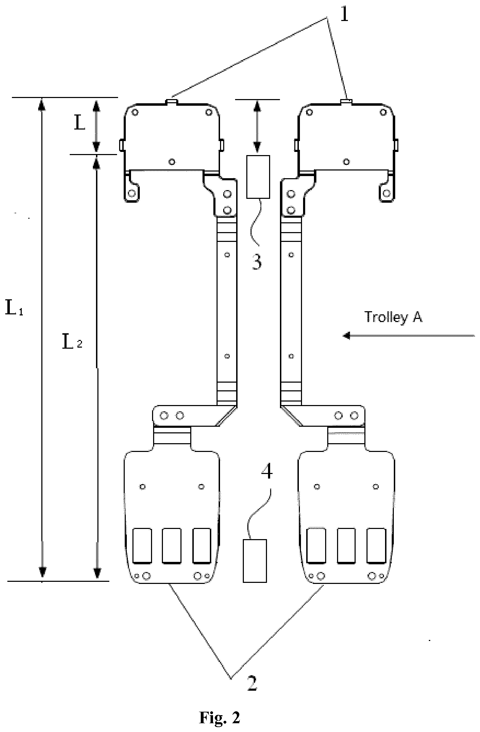

Fig. 2 is a schematic structural diagram of a connector of a charging device for serially stacking mobile devices according to an embodiment of the present invention. The connector of the present embodiment includes a male plug mounted with a first electrode 1 and a female socket mounted with a second electrode 2, and a control member. The control member includes a first control component 3 disposed on the side of the first electrode 1 and a second control component 4 disposed on the side of the second electrode 2 which is electrically connected to the first control component 3. The control member is configured such that when a current connector is connected to its anterior connector, a first control component 3 of the current connector and a second control component 4 of the anterior connector are coupled after a first electrode 1 of the current connector and a second electrode 2 of the anterior connector come into contact; and when a current connector is separated from its anterior connector, a first control component 3 of the current connector and a second control component 4 of its anterior connector are decoupled before the first electrode 1 of the current connector and the second electrode 2 of the anterior connector are separated.

The connector in this embodiment is mounted in a mobile device (e.g., a trolley) for enabling electrical connections between mobile devices. The position of the control member in the connector is set such that, only after the connection between the first electrode 1 mounted on the male plug of the current mobile device and the second electrode 2 mounted in the female socket of its anterior mobile device is stabilized, the first control component 3 of the current connector and the second control component 4 of the anterior connector can be coupled, thus connecting the charging device for the current mobile device into the charging bus. In addition, when the two mobile devices are separated, the first electrode 1 mounted in the male plug of the current mobile device is disconnected from the second electrode 2 mounted in the female socket of the anterior mobile device only after the first control component 3 of the current connector is decoupled from the second control component 4 of the anterior connector, thereby avoiding the generation of arcs during direct power-on or power-off when the connection between the first electrode 1 of the current connector and the second electrode 2 of the anterior connector is unstable, which causes damage to the connector mounted on the mobile device.

In one embodiment, distance L2 between a front end of the first control component 3 and a rear end of the second control component 4 is shorter than distance L1 between a front end of the first electrode 1 and a rear end of the second electrode 2.

In this embodiment, by defining the length between distance L2 and distance L1, distance L2 indicating the distance between the front end of the first control component 3 and the rear end of the second control component 4, distance L1 indicating the distance between the front end of the first electrode 1 and the rear end of the second electrode 2, the control of the secure connection of the mobile device is realized. That is, by setting L2 to be smaller than LI, only after the first electrode 1 of the connector of the current mobile device and the second electrode 2 of its anterior mobile device are sufficiently stably in contact, the first control component 3 of the connector of the current mobile device can be coupled with the second control component 4 of the connector of the anterior mobile device, thereby achieving a stable electrical connection between the current mobile device and the anterior mobile device.

In some embodiments, the rear ends of the first and second control components 3 and 4 are respectively aligned with the rear ends of the first and second electrodes 1 and 2, and lengths of the first and second control components 3 and 4 are respectively shorter than lengths of the first and second electrodes 1 and 2 by a predetermined value.

In the present embodiment, the positional relationship and the length relationship of the first electrode 1, the first control component 3, the second electrode 2, and the second control component 4 is defined such that: when a current connector is connected to its anterior connector, the first electrode 1 of the current connector and the second electrode 2 of the anterior connector first come into contact with each other, and then the first control component 3 of the current connector and the second control component 4 of the anterior connector are coupled with each other; when a current connector is separated from its anterior connector, the first control component 3 of the current connector and the second control component 4 of the anterior connector are decoupled first, and then the first electrode 1 of the current connector is separated from the second electrode 2 of the anterior connector.

The first control component 3 of the current connector and the second control component 4 of the anterior connector may be coupled by mechanical contact or non-contact sensing.

The non-contact sensing can adopt infrared sensing mode, laser sensing mode or RFID near field sensing mode.

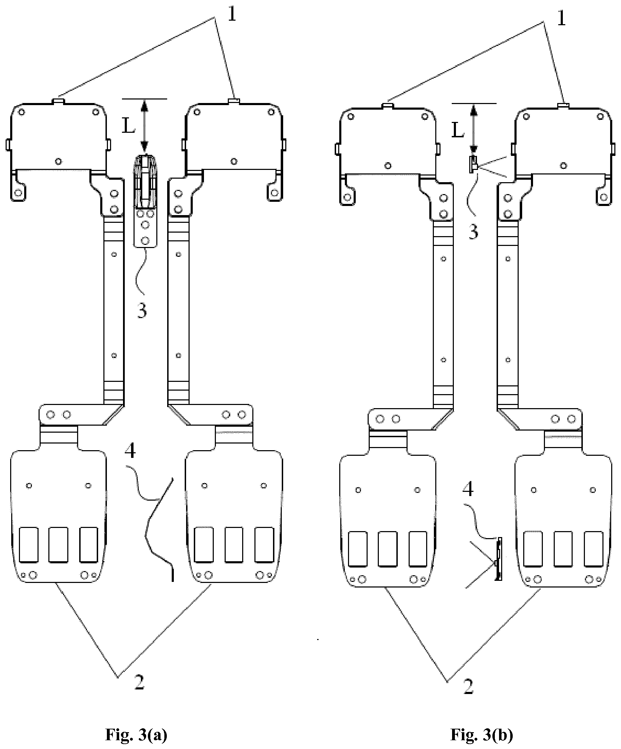

Fig. 3(a) is a schematic structural view of a contact-type connector. As shown in Fig. 3(a), the first control component 3 is a metal electrode and the second control component 4 is metal elastic slice or vice versa. In the charging queue, the metal electrode is coupled with the metal elastic slice for turning on or off the charging circuit. Other structures that can realize electrical connections can also be used.

Fig. 3(b) is a schematic structural view of a photoelectric induction-type connector. As shown in Fig. 3(b), the first control component 3 is an infrared detection receiving module, and the second control component 4 is an infrared detection transmitting module. Those skilled in the art would understand that the first control component 3 and the second control component 4 may also adopt other ways such as laser or RFID modules to achieve the coupling and cooperating with each other.

Referring to Figs. 2-4, with the connector of the above-described embodiment of the present invention, a security control device 100 for charging mobile devices stacked serially can be constructed. The security control device 100 includes a connector in any one of the above-described embodiments and a detection control switch 101 that is turned on or off according to a state of coupling or decoupling of the first control component 3 and the second control component 4.

The security control device 100 can be used in a charging device for a mobile device to enable a secure connection of between mobile devices which are serial stacked to be charged. The detection control switch 101 is configured to detect whether the first control component 3 of the current connector and the second control component 4 of its anterior connector are in a coupling state or a decoupling state and to turn on or off the charging circuit according to the detection result (this portion will be described in detail hereinafter). When the detection control switch 101 detects that the first control component 3 of the current connector and the second control component 4 of the anterior connector are in a coupling state, the detection switch 101 is adjusted to a first mode to connect the charging device for the mobile device to the charging bus circuit. When the detection control switch 101 detects that the first control component 3 of the current connector and the second control component 4 of the front connector are in a decoupling state, the detection switch 101 is adjusted to a second mode to disconnect the charging device for the mobile device from the charging bus circuit.

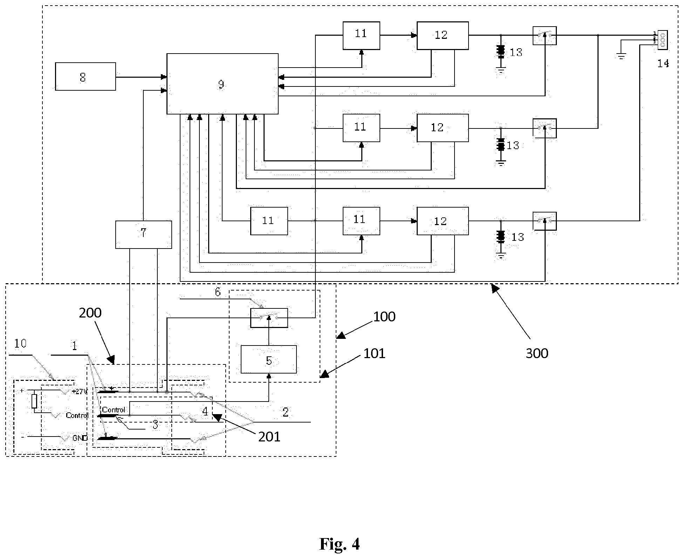

As shown in Fig. 4, the detection control switch 101 may include:
a detection unit 5 configured to detect, for adjacent mobile devices, a state of coupling or decoupling of the first control component 3 of the mobile device and the second control component 4 of its anterior mobile device; and
a switch unit 6 configured to receive an output signal from the detection unit 5, and connect an external charging power supply to a charging circuit or disconnect external charging power from the charging circuit according to the signal to achieve charging and stop charging.

With the above-described security control device 100, when the detection control switch 101 detects that the first control component 3 of the current connector and the second control component 4 of anterior connector are in a coupling state (connected), the first electrode 1 and the second electrode 2 has established a stable and sufficient connection. At this time, the charging device is connected to the charging bus circuit, and no arc will occur at the first electrode 1 and the second electrode 2. Also, when the detection control switch detects that the first control component 3 of the current connector and the second control component 4 of the anterior connector are in a decoupling state, and the first electrode 1 of the current connector and the second electrode 2 of the anterior connector are still in a not-completely decoupling state, at this time the charging device and the charging bus circuit have been disconnected, and there will be no arc phenomenon when the first electrode 1 of the current connector and the second electrode 2 of the anterior connector are separated. Therefore, the security control device of the present embodiment fundamentally solves the problem of secure charging connection of the mobile device.

With the above security control device, a charging device can also be provided, as shown in Fig. 4. The charging device includes a connector 200, a control member 201, a detection control switch 101, and a charging circuit 300. The connector 200 includes a male plug mounted with a first electrode 1 and a female socket mounted with a second electrode 2. The control member 201 includes a first control component 3 disposed on the side of the first electrode 1 and a second control component 4 disposed on the side of the second electrode 2 and electrically connected to the first control component 3. The detection control switch 101 and the control member 201 are electrically connected, and can be turned on or off according to a state of coupling or decoupling of the first control component 3 of the current connector and the second control component 4 of the anterior connector. The charging circuit 300 is connected to an external power supply by control switch 6 included in the detection control switch 101.

The main electrical elements of the charging circuit 300 include: a charging current detection unit 7, a position detection unit 8, a charging management control unit 9, a DC/DC (DC to DC power supply) 11, a control management unit 12, a battery 13, and a player power supply output terminal 14.

The connection relationship between the connector and the charging power supply as well as the charging circuit in the charging device is as follows.

The positive and negative poles of the first electrode 1 of the connector are respectively connected to the positive and negative poles of the charging power supply (the power supply terminal of the charging bus circuit) 10. The positive and negative poles of the second electrode 2 are connected to the positive and negative poles of the trolley stacked in series thereafter. The first control component 3 is connected to the second control component 4. The first control component 3 can be connected to a control element (the structure of which is the same as that of the second control component 4) of the charging power source 10. The detection control unit 5 is connected to the charging circuit of the trolley via an electronic switch 6. The electronic switch 6 is opened or closed in accordance with the control of the detection control unit 5.

The charging management control unit 9 receives the signals detected by the position detection unit 8 and the charging current detection unit 7, respectively. The charge management control unit 9 controls and manages three charging circuits. Each charging circuit is output to the player power supply output terminal 14 mounted on the trolley through the DC/DC 11, the control management unit 12 and the battery 13 respectively,.

In the present embodiment, the position detection unit 8 is configured to detect position information of the trolley stacked serially to be charged in the charging queue. The charging current detection unit 7 is configured to detect current information flowing through the charging circuit bus. The charging management control unit 9 is configured to acquire the position information detected by the position detection unit 8 and the current information detected by the charging current detection unit 7.

An embodiment of the present invention also provides a mobile device comprising a device body and a charging device as described in any one of the above embodiments of the present invention and mounted on the device body.

The following is a further description of dividing the process of stacking the trolley A to its anterior trolley B in series and then connecting to the charging queue into three states. It can be understood that the mobile device in this embodiment may be, but not limited to, a trolley, and is exemplified by a contact-type connector.

### First state:

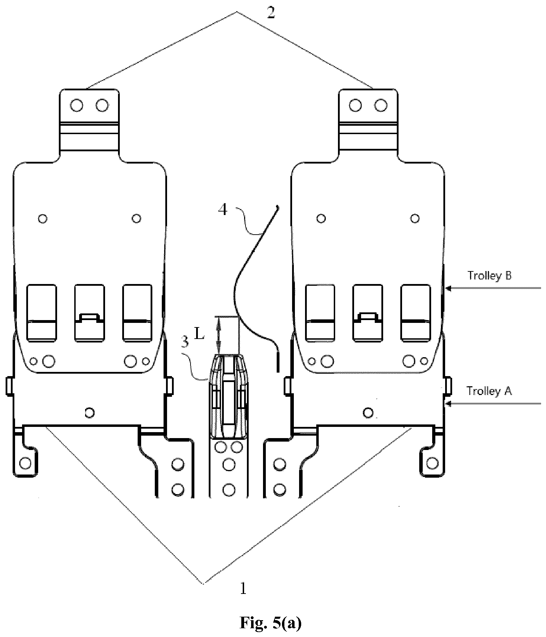

Fig. 5(a) is a schematic view showing the state of a contact-type connector when the trolley A and the trolley B are initially in contact. Referring to Fig. 5(a), when the first electrode 1 of the trolley A and the second electrode 2 of the trolley B are initially in contact, the distance between the first control component 3 of the trolley A and the second control component 4 of the trolley B is L without electrical contact; the detection control unit 5 of the trolley A does not detect the electrical contact state (e.g., no small current passing through the first control component 3 is detected), and the electronic switch 6 is still in an off state. Although the first electrode 1 of the trolley A is connected to the second electrode 2 (charging electrode) on the female socket of the front trolley B, the charging circuit is not turned on, and the battery of the trolley A cannot be charged.

### Second state:

The trolley A is further moved closer to the trolley B, so that the first electrode 1 of the trolley A connects with the second electrode 2 of the trolley B by a deeper insertion. When the overlapping length of the two is less than L, there is still a distance between the first control component 3 of the trolley A and the second control component 4 of the trolley B. At this time, the trolley A cannot be charged.

### Third state:

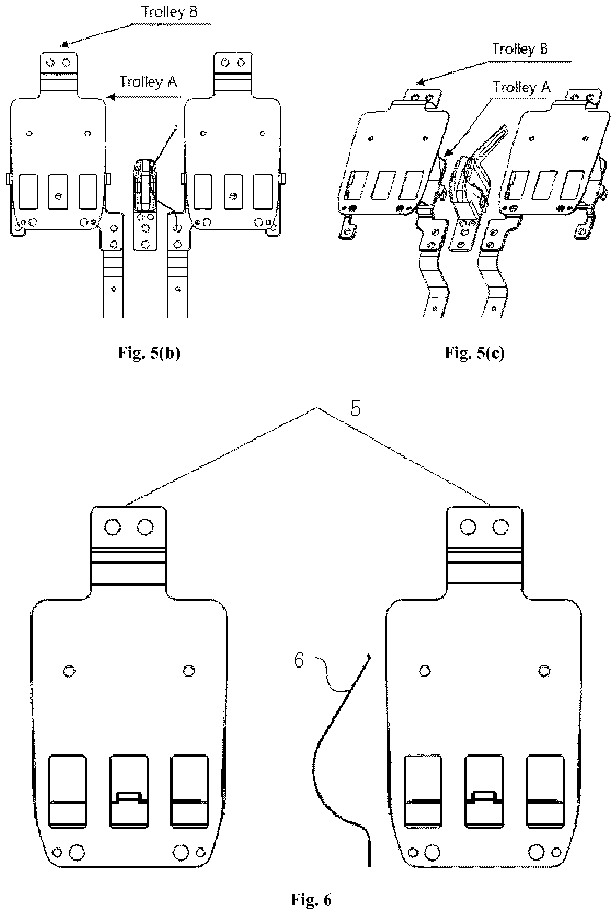

Fig. 5(b) is a plan view showing the structure of the connector in which the electrodes in the trolley A and the trolley B are completely in contact. Fig. 5 (c) is a schematic perspective view of Fig. 5 (b). The first electrode 1 of the trolley A and the second electrode 2 of the trolley B are connected and inserted continuously. When the overlapping length of the two is larger than L (see FIGS. 5(b) and 5(c)), the first control component 3 and the second control component 4 have been contacted. At this point, the charging circuit can be turned on for the trolley.

On the other hand, the process of separating the trolley A from the trolley B is divided into three states.

### First state:

The trolley A is initially separated from the trolley B, referring to Fig. 5(b) and Fig. 5(c). When the length of the first electrode 1 of the trolley A overlapped with the second electrode 2 of the trolley B is greater than or equal to L, the first control component 3 of the trolley A and the second control component 4 of the trolley B are in contact with each other. At this time, the trolley is in a charged state.

### Second state:

The trolley A is further separated from the trolley B. When the length of the first electrode 1 of the trolley A overlapped with the second electrode 2 of the trolley B is less than L, the first control component 3 of the trolley A and the second control component 4 of the trolley B are separated from each other. The detection control unit 5 of the trolley A detects the electrical separation state, the electronic switch 6 is thereby turned off, the charging circuit is turned off, and the battery charging for the trolley A is stopped. The first electrode 1 of the trolley A remains in contact with the second electrode 2 of the trolley B.

### Third state:

The trolley A is further separated from the trolley B. The first electrode 1 of the trolley A is completely separated from the second electrode 2 of the trolley B, and the trolley A is taken out of the charging queue.

Further, the position of the front end of the first control component 3 and the position of the second control component 4 may be flexibly arranged. For example, the first control component 3 may be disposed at an upward position by a predetermined distance L between the positive and negative poles in the first electrode 1. The corresponding second control component 4 may be disposed at an upward position by a predetermined distance L between the positive and negative poles in the second electrode 2.

Preferably, the rear ends of the first control component 3 and the second control component 4 are respectively aligned with the rear ends of the first electrode 1 and the second electrode 2 (the person skilled in the art can understand that the alignment here only needs to be aligned substantially). The lengths of the first control component 3 and the second control component 4 are shorter than the lengths of the first electrode 1 and the second electrode 2 by a predetermined value, respectively.

In the present embodiment, L may be between 25cm and 35cm. The lengths of the first electrode 1 and the second electrode 2 are equal, and the values may be 40cm to 50cm. A large amount of experimental data indicates that the lengths of the first electrode 1 and the second electrode 2 are preferably 45cm and L is preferably 27cm when the connector is in mechanical contact. At this time, the mechanical connection and electrical conduction of the first electrode 1 and the second electrode 2 have the best effect, and the electrode material is saved. When the connector is connectable in a non-contact sensing manner, the lengths of the first electrode 1 and the second electrode 2 are preferably 47cm, and L is preferably 33cm.

Thus, the present invention can obtain a time delay (when the trolley enter into the charging queue, the charging is delayed; when the trolley is taken out of the charging queue, the decoupling from the electrode is delayed) by using the unique design of the position and structure and using the distance difference L. It can ensure that the trolley can start charging after good contact, and the charging for trolley can be stopped before the trolley is separated, which can completely prevent the arcing phenomenon which causes security hazards such as electric sparks.

The principle of eliminating sparks is as follows.

On the one hand, when a trolley is connected into the charging queue to be charged, the positive and negative planar electrode slices at the front end of the charging bus in the trolley are kept in reliable contact with the positive and negative elastic slices of the output terminal of the charging power supply (preferably DC27V). The electronic switch between the charging bus of the trolley and the power supply input circuit is turned on to supply power to the trolley. That is, the contacts for large current (the first electrode 1 and the second electrode 2) first contact well, and then the contacts for small current (the first control component 3 and the second control component 4) are used to control the electronic switch to supply power to the trolley.

On the other hand, when the trolley is detached from the charging queue, the electronic switch 6 between the charging bus of the trolley and the charging power supply input circuit of the trolley is first opened, thus the power supply for the large current portion of the trolley is cut off, and then the connection between the positive and negative planar electrode slices (the first electrode 1 and the second electrode 2) and the positive and negative electrode elastic contact pieces of the charging power supply output terminal is broken. This control principle is equally applicable to the elimination of contact sparks between trolleys.

Therefore, the embodiment can control to turn on or turn off the large current circuit through a small current, ensure that the trolley to be charged is in good contact before start charging, and power off before the trolley is separated, completely preventing the generation of a large surge current and arcing phenomenon at the moment of charging or power-off of more than one serial stacked trolleys which thereby generates security hazards such as electric sparks.

In this example, when a trolley needs to be charged, not only the positive and negative planar electrode slices of the charging bus for the trolley need to be in good contact with the positive and negative elastic contact pieces of the charging power supply, but also the contact-type control electrode of the trolley and the contact-type control electrode elastic contact piece of the charging power supply are required to be in good contact with each other. Moreover, there is a certain order between the connection time of the positive and negative electrodes of the charging bus for the trolley and the contact-type control electrode with the corresponding electrodes of the charging power supply. That is, the positive and negative planar electrode slices of the charging bus for the trolley are first in good contact with the positive and negative electrode elastic contact pieces of the charging power supply, and then the contact-type control electrode metal elastic slice of the trolley and the contact-type control electrode elastic contact piece of the charging power supply contact well. Only when the contact-type control electrode metal elastic slice of the trolley is in good contact with the contact-type control electrode elastic contact piece of the charging power supply, the electronic switch arranged between the charging bus for the trolley and the charging power supply input terminal of the trolley will be connected to turn on the charging input circuit of the trolley. The same is true for the charging connection between the trolleys, which will not be repeated here.

Since the whole serial stacking process follows the principle that only after the large current contacts are in good contact, the large-current power supply electronic switch is turned on to supply power to the charging input circuit of the trolley all the time, so that the contact sparks generated due to the high current or poor contact at the moment of contact between the elastic contact pieces of the charging bus of the front and rear trolleys and the planar electrode slices are well avoided, which protects the security of the power supply electrode of the charging bus (not to be burned by the electric sparks). Since the positive and negative electrode slices of the charging bus and the contact-type control electrode have a sequence of connection, when the trolley is separated from the power supply and one trolley is separated from the other trolley, the contact-type control electrode is disconnected first, and then the high-current power electronic switch which supplies power to the charging input circuit of the trolley is cut off (i.e., powering off the large current portion of the trolley). The trolley behind will automatically cut off the electronic switch that supplies power to its own charging input circuit, and there will be no large current on the charging bus. As the separation process for trolley continues, the positive and negative electrode slices of the charging bus are separated. Thus, when the positive and negative electrode slices of the charging bus of the trolley are separated, there will be no large current on the charging bus of the trolley, and no spark will be generated when the positive and negative electrode slices of the charging bus are separated.

Fig. 6 is a schematic structural diagram of a charging power supply socket for a serially stacked trolley according to an embodiment of the present invention. The charging power supply socket is used to work together with the charging system described above. As shown in Fig. 6, the charging power supply socket includes a power supply electrode 5 for coupling with the first electrode 1 of the trolley, and a second control component 6 disposed with respect to the power supply electrode 5. Those skilled in the art will appreciate that the charging power supply socket may also include a power supply electrode for electrically coupling with the second electrode of the trolley, and a first control component disposed relative to the power supply electrode. In order to optimize the production, the power supply electrode of the power supply socket can be designed as the first electrode or the second electrode of the trolley, so that the product can be designed to be reused and can be flexibly matched, improving the practicality of the product.

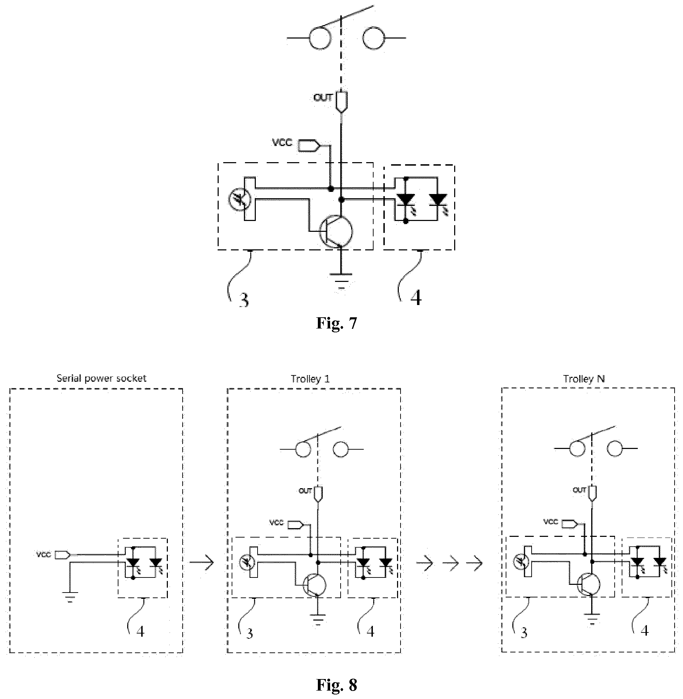

Fig. 7 is a circuit diagram of an infrared detection receiving module and an infrared detection transmitting module according to an embodiment of the present invention. As shown in Fig. 7, the infrared detection transmitting module 3 includes: a first light-emitting diode and a second light-emitting diode. The first and second light-emitting diodes are connected in parallel and then connected to the Vcc end and the ground end, respectively. The infrared detection receiving module 4 may include: a first triode and a second triode connected in series. The first triode is connected in series with the Vcc end. The second triode is connected to the ground end via a triode or directly. In addition, the infrared detection transmitting module 3 and the infrared detection receiving module 4 can also be designed according to needs. For example, the number of triodes in the infrared detection transmitting module 3 can be increased or decreased. Or the number of light-emitting diodes in the infrared detection receiving module 4 can be increased or decreased.

Therefore, the present embodiment has a product with simple structure, low cost and the improved cost performance.

Fig. 8 is a circuit diagram of an infrared detection receiving module and an infrared detection transmitting module in which the trolleys are stacked in series according to an embodiment of the present invention. As shown in Fig. 8, power supply sockets provide power to a plurality of serially stacked trolleys respectively. The power supply socket includes an infrared detection transmitting module 4. The infrared detection receiving module 3 of the trolley 1 receives an infrared signal emitted by the infrared detection transmitting module 4 of the power supply socket, and turns on or off the switch on the trolley 1 to charge or stop the charging for the trolley 1. Similarly, the infrared detection receiving module 3 of the trolley 2 (not shown) receives an infrared signal emitted by the infrared detection transmitting module 4 of the trolley 1, and turns on or off the switch on the trolley 2 to charge or stop the charging for the trolley 2.

Specifically, an infrared transmitting device is disposed near the mounting positions of the positive and negative electrode elastic contact pieces at the output terminal of the charging power supply. An infrared receiving device is disposed near the positive and negative planar metal electrode slices at the front end of the charging bus of the trolley. An infrared transmitting device is disposed in the vicinity of the mounting positions of the positive and negative electrode elastic contact pieces at the rear end of the charging bus of the trolley. The trolley detects, by the infrared receiving device located at the front end of the charging bus, whether or not an infrared signal emitted by the infrared transmitting device installed near the mounting positions of the positive and negative electrode elastic contact pieces of the charging power supply output terminal or of the positive and negative electrode elastic contact pieces of the charging bus of the front trolley is received. In turn, the opening and closing of the electronic switch 6 between the charging bus of the trolley and the charging input circuit of the trolley is controlled. At the same time, the infrared transmitting device located near the mounting positions of the positive and negative electrode elastic contact pieces at the rear end of the charging bus of the trolley is controlled to be turned on and off.

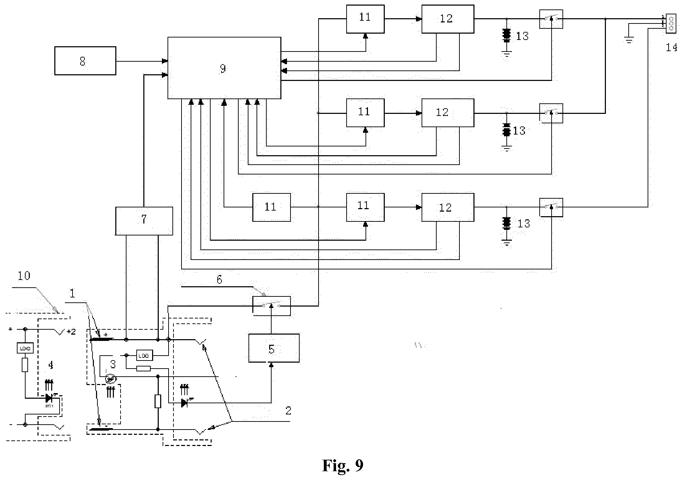

Fig. 9 is a circuit diagram of an infrared inductive-type (non-contact sensing) trolley. This circuit diagram is similar to the circuit diagram shown in Fig. 4, so the similar details of the both are not repeated here. Referring to Fig. 9, the charging process of the infrared sensing mode can be specifically as follows.

The infrared transmitting device 4 of the charging power supply 10 emits an infrared signal. When the head trolley is inserted into the female socket of the charging power supply, the infrared receiving device receives the infrared signal of the infrared transmitting device if the infrared receiving device is aligned with the infrared transmitting device. The trolley control unit connected to the infrared receiving device closes the electronic switch 6 located between the charging bus of the trolley and the charging input circuit of the trolley according to the infrared signal to supply power to the charging input circuit of the trolley. At the same time, the trolley control unit controls the infrared transmitting device disposed near the mounting positions of the positive and negative electrode elastic contact pieces at the rear end of the charging bus of the trolley to emit an infrared signal to provide a control signal for the next trolley.

During the serial stacking process of the trolley (taking the mechanical contact method as an example), the contact between the positive and negative planar metal electrode slices (i.e., the first electrode 1 and the second electrode 2) at the front end of the charging bus of the trolley comes into being first, and the contact between the first control component 3 and the second control component 4 is followed. There is a time difference between the two contacts. Similarly, the infrared sensing methods are also in a chronological order.

When the charging power supply is turned on, in the process of connecting the trolley to the charging power supply, the positive and negative planar metal electrode slices at the front end of the charging bus of the trolley and the positive and negative electrode elastic contact pieces (the first electrode 1 and the second electrode 2) of the output terminal of the charging power supply come into contact first and gradually come into good contact. Next, the infrared receiving device located near the positive and negative planar metal electrode slices at the front end of the charging bus of the trolley receives the infrared signal emitted from the infrared signal transmitting device 4 installed near the mounting positions of the positive and negative electrode elastic contact pieces of the output terminal of the charging power source. Only when the infrared receiving device 3 installed near the positive and negative planar metal electrode slices at the front end of the charging bus of the trolley receives the infrared signal emitted from the infrared signal transmitting device 4 installed near the mounting positions of the positive and negative electrode elastic contact pieces of the output terminal of the charging power supply, the trolley control unit outputs a control signal to control the electronic switch 6 between the charging bus of the trolley and the charging input circuit of the trolley to supply power to the charging input circuit of the trolley, and simultaneously outputs a control signal to control the infrared transmitting device near the mounting positions of the positive and negative electrode elastic contact pieces at the rear end of the charging bus of the trolley to emit an infrared signal to provide an infrared control signal to the trolley that is connected behind.

This is also the case when trolleys are continuously stacked in series behind the existing charging trolley. Namely, in the serial stacking process of trolleys, firstly, the positive and negative planar metal electrode slices at the front end of the charging bus of the trolley stacked behind is first in contact with the positive and negative electrode elastic contact pieces at the rear end of the charging bus of the previous trolley and gradually come into good contact with each other. As the serial stacking process continues, the infrared receiving device installed near the positive and negative planar metal electrode slices at the front end of the charging bus of the trolley receives an infrared signal emitted from the infrared transmitting device near the positive and negative electrode elastic contact pieces at the rear end of the charging trolley of the previous trolley. At this point, the control unit of the rear trolley outputs a control signal to control the electronic switch 6 between the charging bus of the trolley and the charging input circuit of the trolley to supply power to the charging input circuit of the trolley, and outputs a control signal to control the infrared transmitting device near the mounting positions of the positive and negative electrode elastic contact pieces at the rear end of the charging bus of the trolley to emit an infrared signal, which provides an infrared control signal for the trolley that is stacked behind.

The above is only some embodiments of the invention. It will be apparent to those skilled in the art that various modifications and improvements can be made without departing from the spirit and scope of the present invention.

## Claims

1. A connector, comprising:
a male plug having a first electrode and a female socket having a second electrode, and
a control member, the control member comprising:
a first control component disposed on the side of the first electrode,
a second control component disposed on the side of the second electrode and electrically connected to the first control component;
wherein the control member is configured to:
when a current connector is connected to its anterior connector, a first control component of the current connector and a second control component of the anterior connector are coupled with each other after a first electrode of the current connector and a second electrode of the anterior connector come into contact; and
when a current connector is separated from its anterior connector, a first control component of the current connector and a second control component of the anterior connector are decoupled before a first electrode of the current connector and a second electrode of the anterior connector are separated.

2. The connector of claim 1, wherein a distance between a front end of the first control component and a rear end of the second control component is shorter than a distance between a front end of the first electrode and a rear end of the second electrode.

3. The connector of claim 1, wherein rear ends of the first and second control components are respectively aligned with rear ends of the first and second electrodes, and wherein lengths of the first and second control components are respectively shorter than lengths of the first and second electrodes by a predetermined value.

4. The connector of claim 1, wherein
the first control component of the current connector and the second control component of the anterior connector are coupled by way of mechanical contact or non-contact sensing.

5. The connector of claim 4, wherein the non-contact sensing comprises infrared sensing, laser sensing and RFID near field sensing.

6. The connector of claim 4, wherein the first control component is a metal electrode and the second control component is a metal elastic slice.

7. A security control device, comprising a connector according to any one of claims 1 to 6, and further comprising a detection control switch that is turned on or off according to a state of coupling or decoupling of the first control component and the second control component.

8. The security control device of claim 7, wherein the detection control switch comprises:
a detection unit configured to detect, for adjacent connectors, a state of coupling or decoupling of the first control component of a connector and the second control component of its anterior connector, and
a switch unit configured to receive an output signal from the detection unit, and connect an external charging power supply to a charging circuit for charging or disconnect the external charging power supply from the charging circuit to stop the charging operation of the charging circuit according to the signal.

9. A charging device, comprising:
a connector comprising a male plug mounted with a first electrode, a female socket mounted with a second electrode, and a control member, the control member comprising a first control component disposed on the side of the first electrode and a second control component electrically connected to the first control member and disposed on the side of the second electrode,
wherein the control member is configured to: when a current connector is connected to its anterior connector, a first control component of the current connector and a second control component of the anterior connector are coupled after a first electrode of the current connector and a second electrode of the anterior connector come into contact; and when a current connector is separated from its anterior connector, a first control component of the current connector and a second control component of the anterior connector are decoupled before a first electrode of the current connector and a second electrode of the anterior connector are separated;
a detection control switch electrically connected to the control member and turned on or off according to a state of coupling or decoupling of the first control component of the current connector and the second control component of the anterior connector; and
a charging circuit connected to or disconnected from an external power supply through the detection control switch.

10. The charging device of claim 9, wherein the detection control switch comprises:
a detection unit configured to detect, for adjacent mobile devices, a state of coupling or decoupling of the first control component of a mobile device and the second control component of its anterior mobile device, and
a switch unit configured to receive an output signal from the detection unit, and connect an external charging power supply to a charging circuit or disconnect the external charging power supply from the charging circuit to stop the charging operation of the charging circuit according to the signal.

11. A mobile device, comprising a device body and a charging device of claim 9 or 10 mounted on the device body.
